# FASCICULE DE BREVET EUROPEEN

(11) **EP 1 798 088 B1**
(45) Date de publication et mention de la délivrance du brevet: **20.01.2010**
(21) Numéro de dépôt: 06291843.8
(22) Date de dépôt: 30.11.2006
(51) Int. Cl.: B60J 7/12, B60J 7/20

(54) **Procédé de déplacement d'un toit articulé d'un cabriolet**
Verfahren zum Öffnen eines Cabriolet-Daches
Method of opening an openable cabriolet roof

(30) Priorité: 15.12.2005 FR 0512777
(43) Date de publication de la demande: 20.06.2007
(73) Titulaire: Peugeot Citroën Automobiles SA, 78140 Vélizy-Villacoublay (FR)
(72) Inventeur: Bour, Olivier, 78180 Montigny-Le-Bretonneux (FR)

(56) Documents cités:
- EP-A- 0 987 443
- EP-A- 1 108 581
- EP-A- 1 279 541
- DE-A1- 10 031 892
- FR-A- 2 856 014
- GB-A- 718 536
- US-A- 5 934 176
- US-A1- 2005 132 702

## Description

La présente invention concerne un procédé de déplacement d'un toit articulé d'un véhicule automobile, un système de toit articulé ainsi qu'un véhicule automobile équipé d'un tel système.

Le document FR 2 856 014 décrit un système de toit articulé comprenant, d'une part, un toit articulé destiné à être monté sur une partie fixe du véhicule, le toit pouvant prendre une position déployée totale, dans laquelle il est apte à couvrir un habitacle du véhicule, une position repliée, dans laquelle il est apte à être confiné dans un coffre du véhicule, et une position déployée partielle d'accès au coffre, intermédiaire entre les positions repliée et déployée totale, et, d'autre part, un vérin hydraulique de déplacement du toit.

Le toit est formé de deux parties rigides, un pavillon et une lunette arrière, repliées l'une sur l'autre en position repliée. Dans cette position, le toit gêne l'accès au coffre. La position dépliée partielle du toit résout ce problème en permettant l'agrandissement de l'espace d'accès au coffre.

Afin de maintenir le toit en position déployée partielle, le système comprend par ailleurs une came de verrouillage du toit.

En fonctionnement, le système précédent met en oeuvre un procédé de déplacement du toit articulé du type comprenant :
- une étape de déplacement partiel du toit consistant à déplacer le toit entre sa position repliée et sa position déployée partielle en alimentant en fluide sous pression le vérin hydraulique, et
- une étape de déplacement total du toit, distincte de l'étape de déplacement partiel, consistant à déplacer le toit entre sa position repliée et sa position déployée totale en alimentant en fluide sous pression le vérin hydraulique.

Le fluide sous pression soulève le toit depuis la position repliée, de la même manière que pour déployer totalement le toit. Dans sa montée, le toit entre en contact et s'engage avec la came, ce qui est détecté par un capteur qui provoque l'arrêt d'alimentation en fluide du vérin. La came retient alors le toit dans la position déployée partielle.

Un inconvénient de ce procédé réside dans le fait que l'arrêt brusque du toit en position déployée partielle entraîne des contraintes mécaniques importantes sur ce toit, qui peuvent détériorer le système de toit articulé.

Le but de l'invention est de remédier à cet inconvénient en proposant un procédé de déploiement partiel du toit imposant à ce dernier des contraintes mécaniques qu'il peut aisément supporter.

Par ailleurs le document EP-A1-1 279 541 décrit un système de toit articulé selon la préambule de la revendication 7.

A cet effet, l'invention a pour objet un procédé du type précité **caractérisé en ce que** la pression d'alimentation du vérin hydraulique pour l'étape de déplacement partiel est inférieure à la pression d'alimentation du vérin hydraulique pour l'étape de déplacement total du toit.

Grâce à l'invention, la vitesse de montée du toit au cours de son déploiement partiel est réduite, et l'arrêt de ce dernier se fait en douceur.

Un procédé de déploiement partiel selon l'invention peut en outre comporter une ou plusieurs des caractéristiques énoncées dans les revendications dépendantes 2 à 6.
L'invention a également pour objet un système de toit articulé selon la revendication 7.
Un système selon l'invention peut comporter l'une ou plusieurs des caractéristiques énoncées dans les revendications dépendantes 8 à 10.

L'invention a également pour objet un véhicule automobile équipé du système de toit articulé précédent.

L'invention sera mieux comprise à la lecture de la description qui va suivre, donnée uniquement à titre d'exemple, et faite en se référant aux dessins annexés, parmi lesquels :
- la figure 1 est une vue en coupe d'un coffre d'un véhicule automobile coupé/cabriolet comprenant un système de toit articulé selon l'invention ;
- la figure 2 est une vue en coupe de véhicule en configuration coupé ;
- la figure 3 est une vue similaire à celle de la figure 1, le toit étant en position déployée partielle ; et
- les figures 4, 5 et 6 sont des schémas blocs illustrant le fonctionnement du système.

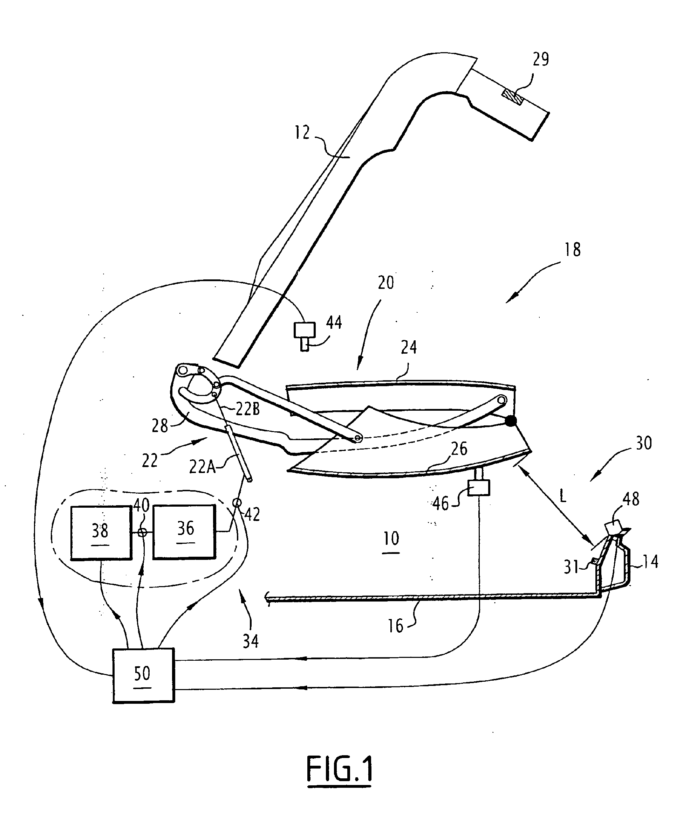

Le coffre 10 représenté sur la figure 1 est délimité, dans sa partie supérieure, par un panneau de coffre 12, dans sa partie arrière, par une traverse 14 et, dans sa partie inférieure, par un plancher 16.

Le coffre 10 est muni d'un système de toit articulé, désigné par la référence générale 18.

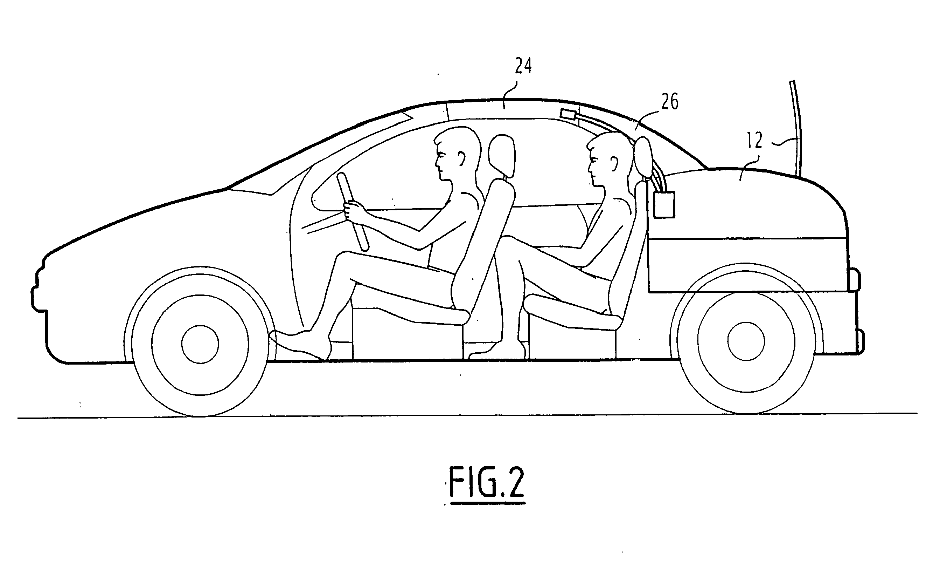

Le système de toit articulé 18 comprend un toit articulé 20 monté sur une partie fixe du véhicule, ainsi qu'un vérin 22 de déplacement du toit 20, apte à lui faire prendre une position déployée totale, dans laquelle il couvre un habitacle du véhicule (cf. figure 2), et une position repliée, dans laquelle il est confiné dans le coffre 10 (cf. figure 1).

Le toit articulé 20 comprend un pavillon 24 et une lunette arrière 26, articulés l'un par rapport à l'autre, ainsi qu'un système de bras 28 sur lequel le pavillon 24 et la lunette arrière 26 sont montés articulés.

Le panneau 12 est basculable vers l'avant du véhicule automobile pour accéder au coffre et vers l'arrière au moins en partie pour permettre le déploiement total du toit comme illustré sur la figure 2. Le basculement vers l'avant est obtenu par action sur un bouton 29 d'ouverture disposé sur le panneau 12.

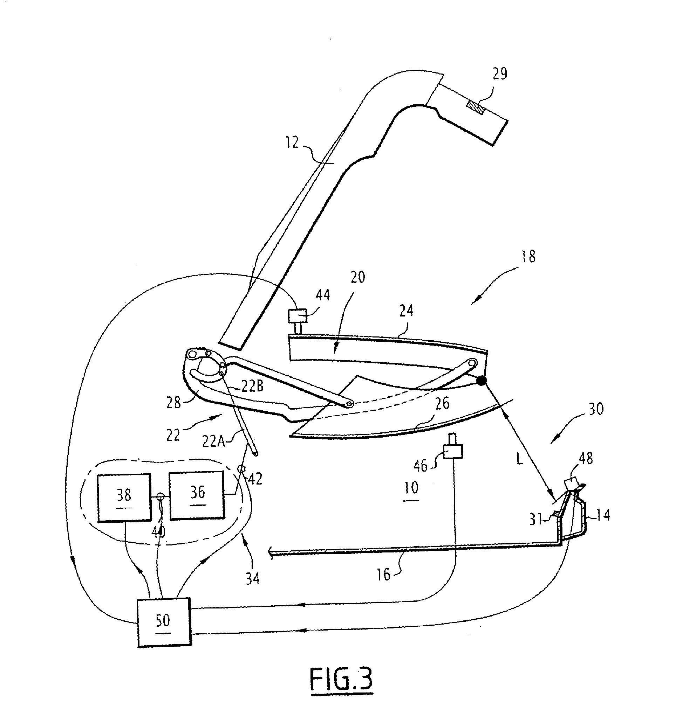

Lorsque le panneau 12 est ouvert vers l'avant, le toit 20 en position repliée dans le coffre 10 ménage avec la traverse arrière 14 un passage 30 dont la largeur L est relativement réduite, comme cela est illustré. Dans le but d'améliorer la largeur du passage 30, le vérin 22 est apte, comme cela sera expliqué par la suite, à positionner le toit 20 depuis la position repliée jusqu'à une position déployée partielle, intermédiaire entre les positions repliée et déployée. Dans cette position déployée partielle, illustrée sur la figure 3, le toit 20 libère le passage 30 formant l'entrée du coffre 10. Le système est pourvu à cet effet d'un bouton 31 de déploiement partiel.

Le vérin 22 est fixé, d'une part, à une partie fixe du véhicule automobile et, d'autre part, au système de bras 28. Il comporte un carter 22A et l'ensemble 22B d'un piston fixé à une extrémité d'une tige. La tige traverse le carter 22A et est fixée par son autre extrémité au bras articulé 28. L'ensemble 22B du piston et de la tige est apte à prendre deux positions extrêmes par rapport au carter 22A : une position rentrée dans laquelle la tige est la plus rentrée dans le carter 22A, et une position sortie dans laquelle la tige est la plus sortie. Lorsque l'ensemble 22B est en position rentrée, le toit 20 est en position repliée, tandis que l'ensemble 22B est en position sortie, le toit 20 est déployé totalement.

Le système 18 comprend par ailleurs des moyens 34 d'alimentation en fluide du vérin 22, comportant une pompe 36 et des moyens d'alimentation électrique 38 de la pompe 36.

Les moyens d'alimentation électrique 38 sont aptes à fournir une tension d'alimentation haute pour déployer totalement le toit 20 et une tension d'alimentation basse, inférieure à la tension d'alimentation haute pour déployer partiellement le toit 20.

La pression du fluide en sortie de la pompe 36 dépend de la tension d'alimentation de cette pompe 36. Ainsi, la pompe 36 fournit un fluide sous pression haute lorsque la tension d'alimentation est haute, et un fluide sous pression basse lorsque la tension d'alimentation est basse.

La pompe 36 est une pompe réversible. Elle peut tourner dans les deux sens de rotation. Un dispositif à relais 40 intercalé entre les moyens d'alimentation 38 et la pompe 36 permet de connecter/déconnecter la pompe 36 aux moyens d'alimentation 38, ainsi que de sélectionner le sens de rotation de la pompe 36.

Les moyens d'alimentation en fluide 34 comportent également une vanne hydraulique 42 reliant la pompe 36 au vérin 22. La vanne 42 coupe ou permet l'alimentation en fluide du vérin 22.

En outre, le système 18 comporte un capteur 44 de détection du toit en position déployée partielle, ainsi qu'un capteur 46 de détection du toit en position repliée et un capteur 48 de détection du panneau 12 refermé.

Le système 18 comporte encore un organe de commande 50, par exemple de type informatique, pour commander les moyens d'alimentation 38, la vanne 42 et le dispositif à relais 40, en fonction de signaux transmis par les capteurs 44, 46, 48 et par le bouton de déploiement partiel 31.

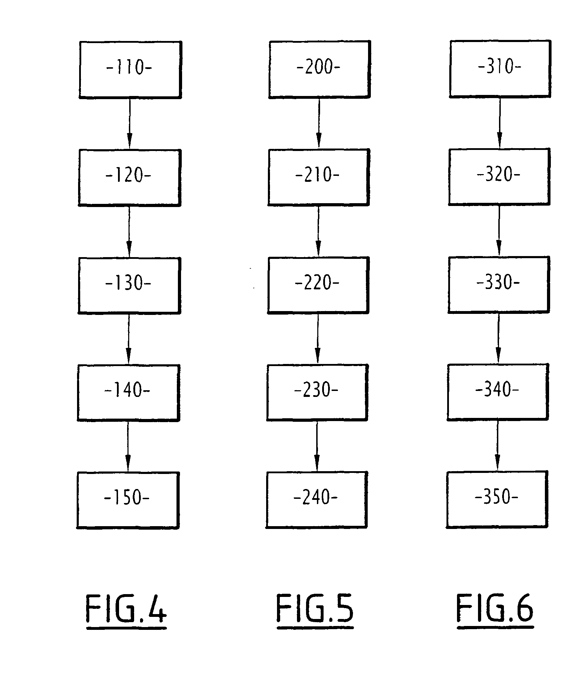

Le fonctionnement du système 18, pour déployer partiellement le toit 20, va à présent être décrit en référence à la figure 4.

Le véhicule est en configuration cabriolet, c'est-à-dire que le toit 20 est en position repliée dans le coffre 10. Un utilisateur souhaite accéder à ce coffre 10, par exemple pour charger et décharger des objets.

Dans cette configuration, l'ensemble 22B du piston et de la tige est dans sa position rentrée, de sorte que ce vérin 22 présente une longueur minimale.

Au cours d'une étape 110, l'utilisateur actionne le bouton 29 d'ouverture du panneau 12. Un mécanisme dédié (non représenté) ouvre alors le panneau 12. Cette ouverture est détectée par le capteur 48 de détection du panneau 12 refermé.

Il s'en suit une étape 120 de temporisation, au cours de laquelle le bouton de déploiement partiel 31 est inhibé pendant un temps prédéterminé à partir de la détection de l'ouverture du panneau 12. Cela signifie que l'organe de commande 50 ne prend pas en compte, pendant ce temps prédéterminé, le signal du bouton de déploiement partiel 31. Le temps prédéterminé correspond au temps nécessaire à l'ouverture. Ainsi, l'étape de temporisation 120 évite qu'une demande de déplacement partiel ne soit exécutée par l'organe 50, alors que le panneau 12 n'est pas relevé.

Le délai prédéterminé étant écoulé, l'utilisateur actionne le bouton 31 de déploiement partiel au cours d'une étape 130. L'action sur le bouton 31 entraîne la mise en marche, par l'organe 50, des moyens d'alimentation électrique 38 de manière que ces derniers fournissent la tension d'alimentation basse. Toujours au cours de cette étape 130, l'organe de commande 50 ouvre la vanne 42 et commande le dispositif à relais 40 pour que ce dernier sélectionne le sens de rotation de la pompe 36 adéquat pour relever le toit. Ce sens de rotation est appelé par la suite sens de montée. L'ensemble 22B du piston et de tige est ainsi poussé par le fluide à basse pression fourni par la pompe 36 vers sa position sortie, et entraîne la montée du toit 20.

Dans sa montée, le toit 20 atteint sa position déployée partielle, ce qui est détecté par le capteur 44 de détection du toit en position déployée partielle au cours d'une étape 140. Cette détection du capteur est transmise à l'organe de commande 50 qui ferme la vanne hydraulique 42 de sorte à maintenir la pression de fluide constante dans le vérin 22.

Le procédé continue avec une étape 150 au cours de laquelle l'organe de commande 50 règle le dispositif à relais 40 pour déconnecter la pompe 36 des moyens d'alimentation électrique 38. La pompe 36 est donc désactivée.

La désactivation de la pompe 36 après la fermeture de la vanne hydraulique 42 permet d'éviter une baisse de pression de fluide dans le vérin 22, qui provoquerait un déplacement du toit vers sa position repliée.

Néanmoins, en variante, les étapes 140 et 150 peuvent être réalisées en concomitance.

Le toit 20 est alors maintenu en position déployée partielle par la pression de fluide constante dans le vérin 22, et ne gêne pas l'accès au coffre 10.

En référence à la figure 5, lorsque l'utilisateur n'a plus besoin d'accéder au coffre 10, il commande le déplacement du toit 20 en position repliée en appuyant à nouveau sur le bouton de déploiement partiel 31 au cours d'une étape 200.

Cette étape 200 entraîne l'exécution d'une étape 210 au cours de laquelle l'organe de commande 50 ouvre la vanne 42 et règle le dispositif à relais 40 pour connecter la pompe 36 dans le sens de rotation adéquat pour faire redescendre le toit. Ce sens de rotation est appelé par la suite sens de descente. Le sens de rotation de descente est le sens inverse du sens de rotation de montée de l'étape 130. L'organe de commande 50 règle également les moyens d'alimentation 38 pour qu'ils fournissent une tension basse entraînant une pression basse en sortie de la pompe 36 et donc une descente ralentie.

Le toit 20 commence alors sa descente, ce qui est détecté au cours d'une étape 220 par le capteur 44 de détection du toit 20 en position déployée partielle.

Le toit 20 descend ainsi jusqu'à sa position repliée, ce qui est détecté par le capteur 46 de position repliée au cours d'une étape 230.

Le procédé continue alors par une étape 240 de libération de pression au cours de laquelle, pendant un temps prédéterminé à partir de la détection de la présence du toit en position repliée, l'organe de commande 50 ferme la vanne 42 et règle le dispositif à relais 40 pour sélectionner le sens de rotation de montée. Cette étape 240 permet de libérer la pression dans le vérin 22, et, de manière plus générale, dans le circuit hydraulique. La libération de pression permet de limiter les risques de fuites dans le circuit hydraulique, et de limiter la fatigue des joints que ce dernier comporte.

Le fonctionnement du système 18, pour déployer totalement le toit 20, va à présent être décrit en référence à la figure 6.

Le véhicule est en configuration cabriolet, c'est-à-dire que le toit 20 est en position repliée dans le coffre 10.

Au cours d'une étape 310, l'utilisateur commande le déploiement total du toit, à l'aide d'un dispositif de commande présent sur le tableau de bord (non représenté).

Un mécanisme dédié bascule alors en partie le panneau 12 vers l'arrière comme cela est illustré sur la figure 2, au cours d'une étape 320.

Il s'en suit une étape 330 au cours de laquelle l'organe de commande 50 commande les moyens d'alimentation 38 pour que ces derniers fournissent la tension d'alimentation haute, entraînant une pression haute en sortie de la pompe 36. La vanne 42 est ouverte et le dispositif à relais réglé pour connecter la pompe 36 et sélectionner le sens de rotation de montée.

Le toit 20 est déployé au cours d'une étape 340, à une vitesse supérieure à sa vitesse de montée lors de son déploiement partiel (étape 130), à cause de la pression du fluide plus élevée.

Il continue sa course jusqu'à être complètement déployé. Le toit 22 est maintenu dans cette position par son propre poids, sans qu'une action du vérin 22 ne soit nécessaire. Puis, au cours d'une étape 350, l'organe de commande 50 ferme la vanne 42 et désactive les moyens d'alimentation 38.

En variante, le déploiement total du toit 20 comprend également une étape de libération de pression dans le vérin 22, similaire à l'étape 240.

Le fonctionnement du système 18 pour replier le toit 20 depuis sa position déployée totale est similaire au fonctionnement précédent (figure 6), si ce n'est que le sens de rotation de descente est sélectionné.

## Revendications

1. Procédé de déplacement d'un toit articulé, mis en oeuvre par un système (18) de toit articulé comprenant :
- un toit articulé (20) destiné à être monté sur une partie fixe du véhicule (20), le toit pouvant prendre une position déployée totale, dans laquelle il est apte à couvrir un habitacle du véhicule, une position repliée, dans laquelle il est apte à être confiné dans un coffre (10) du véhicule, et une position déployée partielle d'accès au coffre (10), intermédiaire entre les positions repliée et déployée totale, et
- un vérin hydraulique (22) de déplacement du toit (20),
le procédé comprenant :
- une étape (130) de déplacement partiel du toit (20) consistant à déplacer le toit (20) entre sa position repliée et sa position déployée partielle en alimentant en fluide sous pression le vérin hydraulique (22), et
- une étape (340) de déplacement total du toit (20), distincte de l'étape de déplacement partiel (130), consistant à déplacer le toit (20) entre sa position repliée et sa position déployée totale en alimentant en fluide sous pression le vérin hydraulique (22),
le procédé étant **caractérisé en ce que** la pression d'alimentation du vérin hydraulique (22) pour l'étape de déplacement partiel (130) est inférieure à la pression d'alimentation du vérin hydraulique (22) pour l'étape (340) de déplacement total du toit (20).

2. Procédé selon la revendication 1, **caractérisé en ce que** l'étape (130) de déplacement partiel du toit (20) consiste à déplacer le toit (20) depuis sa position repliée jusqu'à sa position déployée partielle.

3. Procédé selon la revendication 2, **caractérisé en ce que,** le système comprenant une vanne hydraulique (42) pour couper ou permettre l'alimentation en fluide du vérin (22), il comprend une étape (140) consistant à fermer la vanne (42) lorsque le toit (20) est détecté en position déployée partielle.

4. Procédé selon la revendication 2 ou 3, **caractérisé en ce que,** le système (18) comprenant une pompe d'alimentation en fluide du vérin, il comprend une étape (150) consistant à désactiver la pompe (38) lorsque le toit (20) est détecté en position déployée partielle.

5. Procédé selon la revendication 1, **caractérisé en ce que** l'étape de déplacement partiel du toit consiste à déplacer le toit depuis sa position déployée partielle jusqu'à sa position repliée.

6. Procédé selon la revendication 5, **caractérisé en ce qu'**il comprend une étape (240) consistant à libérer la pression de fluide dans le vérin (22) lorsque le toit est détecté en position repliée.

7. Système de toit articulé comprenant :
- un toit (20) articulé destiné à être monté sur une partie fixe du véhicule, le toit (20) pouvant prendre une position déployée totale, dans laquelle il est destiné à couvrir un habitacle du véhicule, une position repliée, dans laquelle il est destiné à être confiné dans un coffre (10) du véhicule, et une position déployée partielle d'accès au coffre (10), intermédiaire entre les positions repliée et déployée totale, et
- un vérin hydraulique (22) de déplacement du toit (20),
**caractérisé en ce qu'**il comprend des moyens d'alimentation en fluide du vérin hydraulique (22) configurés pour fournir de manière sélective :
- un fluide sous pression basse pour déplacer le toit (20) entre la position repliée et la position déployée partielle ; et
- un fluide sous pression haute, pour déplacer le toit entre la position repliée et la position déployée totale,
la pression basse étant inférieure à la pression haute.

8. Système selon la revendication 7, **caractérisé en ce qu'**il comprend une vanne hydraulique (42) reliant les moyens d'alimentation (34) au vérin (22), la vanne (42) étant configurée pour couper ou permettre l'alimentation en fluide du vérin (22).

9. Système selon la revendication 7 ou 8, **caractérisé en ce que** les moyens d'alimentation en fluide (34) comprennent une pompe hydraulique (36) et des moyens (38) d'alimentation électrique de la pompe (36), les moyens d'alimentation électrique (38) étant configurés pour fournir de manière sélective une tension haute et une tension basse, inférieure à la tension haute.

10. Système selon la revendication 9, **caractérisé en ce qu'**il comprend un dispositif à relais (40) reliant les moyens d'alimentation électrique (38) à la pompe (36), configuré pour connecter ou déconnecter la pompe (36) des moyens d'alimentation (38) et à régler le sens de rotation de la pompe (36).

11. Véhicule automobile équipé d'un système de toit articulé selon l'une quelconque des revendications 7 à 10.

## Claims

1. Method for moving a hinged roof, used by a hinged roof system (18) comprising:
• a hinged roof (20) designed to be mounted on a fixed part of the vehicle, the roof (20) being able to adopt a fully unfolded position, in which it is suitable for covering a passenger compartment of the vehicle, a folded position, in which it is suitable to be confined in a boot (10) of the vehicle, and, intermediate between the folded and fully unfolded positions, a partially unfolded position for access to the boot (10), and
• a hydraulic actuator (22) for moving a roof (20),
the method comprising:
• a step (130) of partial movement of the roof (20) consisting in moving the roof (20) between its folded position and its partially unfolded position by supplying pressurized fluid to the hydraulic actuator (22), and
• a step (340) of total movement of the roof (20), distinct from the step of partial movement (130), consisting in moving the roof (20) between its folded position and its fully unfolded position by supplying pressurized fluid to the hydraulic actuator (22),
the method being **characterized in that** the supply pressure to the hydraulic actuator (22) for the step of partial movement (130) is less than the supply pressure to the hydraulic actuator (22) for the step (340) of total movement of the roof (20).

2. Method according to Claim 1, **characterized in that** the step (130) of partial movement of the roof (20) consists in moving the roof (20) from its folded position to its partially unfolded position.

3. Method according to Claim 2, **characterized in that** the system comprises a hydraulic valve (42) for interrupting or permitting the supply of fluid to the actuator (22), and the method comprises a step (140) consisting in closing the valve (42) when the roof (20) is detected to be in the partially unfolded position.

4. Method according to Claim 2 or 3, **characterized in that** the system (18) comprises a pump for supplying fluid to the actuator, and the method comprises a step (150) consisting in turning the pump (38) off when the roof (20) is detected to be in the partially unfolded position.

5. Method according to Claim 1. **characterized in that** the step of partial movement of the roof consists in moving the roof from its partially unfolded position to its folded position.

6. Method according to Claim 5, **characterized in that** it comprises a step (240) consisting in releasing the fluid pressure in the actuator (22) when the roof is detected to be in the folded position.

7. Hinged roof system comprising:
• a hinged roof (20) designed to be mounted on a fixed part of the vehicle, the roof (20) being able to adopt a fully unfolded position, in which it is designed to cover a passenger compartment of the vehicle, a folded position, in which it is designed to be confined in a boot (10) of the vehicle, and, intermediate between the folded and fully unfolded positions, a partially unfolded position for access to the boot (10), and
• a hydraulic actuator (22) for moving a roof (20),
**characterized in that** it comprises means for supplying fluid to the hydraulic actuator (22) which are configured to supply, selectively:
• a fluid at low pressure for moving the roof (20) between the folded position and the partially unfolded position; and
• a fluid at high pressure for moving the roof between the folded position and the fully unfolded position,
the low pressure being less than the high pressure.

8. System according to Claim 7, **characterized in that** it comprises a hydraulic valve (42) connecting the supply means (34) to the actuator (22), the valve (42) being configured to stop or permit the supply of fluid to the actuator (22).

9. System according to Claim 7 or 8, **characterized in that** the fluid supply means (34) comprise a hydraulic pump (36) and electrical power supply means (38) for the pump (36), the electrical power supply means (38) being configured to supply, selectively, a high voltage and a low voltage, the latter being lower than the former.

10. System according to Claim 9, **characterized in that** it comprises, connecting the electrical power supply means (38) to the pump (36), a relay device (40) configured to connect or disconnect the pump (36) from the power supply means (38) and to control the direction of rotation of the pump (36).

11. Motor vehicle equipped with a hinged roof system according to any one of Claims 7 to 10.

## Patentansprüche

1. Verfahren zum Verlagern eines Faltdachs, das durch ein Faltdachsystem (18) ausgeführt wird, das enthält:
- ein Faltdach (20), das dazu vorgesehen ist, an einem festen Teil des Fahrzeugs (20) angebracht zu werden, wobei das Dach eine vollständig entfaltete Position, in der es einen Fahrgastraum des Fahrzeugs abdecken kann, eine zusammengefaltete Position, in der es in einem Kofferraum (10) des Fahrzeugs eingeschlossen werden kann, und eine teilweise entfaltete Position zwischen der zusammengefalteten und der vollständig entfalteten Position für einen Zugang zum Kofferraum (10) annehmen kann, und
- einen Hydraulikstellzylinder (22) für die Verlagerung des Dachs (20),
wobei das Verfahren enthält:
- einen Schritt (130) des teilweisen Verlagerns des Dachs (20), der darin besteht, das Dach (20) zwischen seiner zusammengefalteten Position und seiner teilweise entfalteten Position zu verlagern, indem der Hydraulikstellzylinder (20) mit Druckfluid versorgt wird, und
- einen Schritt (340) des vollständigen Verlagerns des Dachs (20), der von dem Schritt des teilweisen Verlagerns (130) verschieden ist und darin besteht, das Dach (20) zwischen seiner zusammengefalteten Position und seiner vollständig entfalteten Position zu verlagern, indem der Hydraulikstellzylinder (22) mit Druckfluid versorgt wird,
wobei das Verfahren **dadurch gekennzeichnet ist, dass** der Versorgungsdruck des Hydraulikstellzylinders (22) für den Schritt des teilweisen Verlagerns (130) niedriger ist als der Versorgungsdruck des Hydraulikstellzylinders (22) für den Schritt (340) des vollständigen Verlagerns des Dachs (20).

2. Verfahren nach Anspruch 1, **dadurch gekennzeichnet, dass** der Schritt (130) des teilweisen Verlagerns des Dachs (20) darin besteht, das Dach (20) aus seiner zusammengefalteten Position bis in seine teilweise entfaltete Position zu verlagern.

3. Verfahren nach Anspruch 2, **dadurch gekennzeichnet, dass** es dann, wenn das System einen Hydraulikschieber (42) aufweist, um die Versorgung des Stellzylinders (22) mit Fluid zu unterbrechen oder zuzulassen, einen Schritt (140) enthält, der darin besteht, den Schieber (42) zu schließen, wenn das Dach (20) in der teilweise entfalteten Position erfasst wird.

4. Verfahren nach Anspruch 2 oder 3, **dadurch gekennzeichnet, dass** es dann, wenn das System (18) eine Pumpe für die Versorgung des Stellzylinders mit Fluid aufweist, einen Schritt (150) enthält, der darin besteht, die Pumpe (38) zu deaktivieren, wenn das Dach (20) in der teilweise entfalteten Position erfasst wird.

5. Verfahren nach Anspruch 1, **dadurch gekennzeichnet, dass** der Schritt des teilweisen Verlagerns des Dachs darin besteht, das Dach aus seiner teilweise entfalteten Position in seine zusammengefaltete Position zu verlagern.

6. Verfahren nach Anspruch 5, **dadurch gekennzeichnet, dass** es einen Schritt (240) enthält, der darin besteht, den Druck des Fluids im Stellzylinder (22) zu entlasten, wenn das Dach in der zusammengefalteten Position erfasst wird.

7. Faltdachsystem, mit:
- einem Faltdach (20), das dazu vorgesehen ist, an einen festen Teil des Fahrzeugs angebracht zu werden, wobei das Dach (20) eine vollständig entfaltete Position, in der es dazu vorgesehen ist, einen Fahrgastraum des Fahrzeugs abzudecken, eine zusammengefaltete Position, in der es dazu vorgesehen ist, in einem Kofferraum (10) des Fahrzeugs eingeschlossen zu werden, und eine teilweise entfaltete Position zwischen der zusammengefalteten Position und der vollständig entfalteten Position für den Zugang zum Kofferraum (10) einzunehmen, und
- einen Hydraulikstellzylinder (22) für die Verlagerung des Dachs (20),
**dadurch gekennzeichnet, dass** es Mittel für die Versorgung des Hydraulikstellzylinders (22) mit Fluid aufweist, die konfiguriert sind, um wahlweise zu liefern:
- ein mit niedrigem Druck beaufschlagtes Fluid, um das Dach (20) zwischen der zusammengefalteten Position und der teilweise entfalteten Position zu verlagern; und
- ein mit hohem Druck beaufschlagtes Fluid, um das Dach zwischen der zusammengefalteten Position und der vollständig entfalteten Position zu verlagern,
wobei der niedrige Druck niedriger als der hohe Druck ist.

8. System nach Anspruch 7, **dadurch gekennzeichnet, dass** es einen Hydraulikschieber (42) aufweist, der die Versorgungsmittel (34) mit dem Stellzylinder (22) verbindet, wobei der Schieber (42) konfiguriert ist, um die Versorgung des Stellzylinders (22) mit Fluid zu unterbrechen oder zuzulassen.

9. System nach Anspruch 7 oder 8, **dadurch gekennzeichnet, dass** die Fluidversorgungsmittel (34) eine Hydraulikpumpe (36) und Mittel (38) für die elektrische Versorgung der Pumpe (36) aufweisen, wobei die elektrischen Versorgungsmittel (38) konfiguriert sind, um wahlweise eine hohe Spannung oder eine niedrige Spannung, die niedriger als die hohe Spannung ist, zu liefern.

10. System nach Anspruch 9, **dadurch gekennzeichnet, dass** es eine Schaltvorrichtung (40) aufweist, die die elektrischen Versorgungsmittel (38) mit der Pumpe (36) verbindet und konfiguriert ist, um die Pumpe (36) mit den Versorgungsmitteln (38) zu verbinden oder hiervon zu trennen, und um die Drehrichtung der Pumpe (36) zu steuern.

11. Kraftfahrzeug, das mit einem Faltdachsystem nach einem der Ansprüche 7 bis 10 ausgerüstet ist.
